# EUROPEAN PATENT APPLICATION

(11) **EP 2 815 966 A1**
(43) Date of publication of application: **24.12.2014**
(21) Application number: 13400013.2
(22) Date of filing: 20.06.2013
(51) Int. Cl.: B64C 27/12, B64D 35/08

(54) **Rotary wing aircraft with a propulsion system**

(71) Applicant: AIRBUS HELICOPTERS DEUTSCHLAND GmbH, 86609 Donauwörth (DE)
(72) Inventor: Günther, Sebastian, D_86150 Augsburg (DE); Bebesel, Marius, D_86150 Augsburg (DE); Mores, Sebastian, D_81479 München (DE)
(74) Representative: GPI & Associés

(57) **Abstract**

The invention relates to a rotary wing aircraft (1) with a propulsion system and one or more consumer units (2). Said propulsion system comprises control means, two or more primary power units (3), at least one of the primary power units (3) being controllable by the control means to be optionally inoperative while at least another one of the primary power units (3) is fully operative. Said propulsion system comprises at least one supplementary power unit (7), controllable by the control means to be optionally operative and at least one gearbox (5) with input and output interfaces. Said at least one gearbox (5) is connected by means of said output interfaces to the one or more consumer units (2). Each of the primary and supplementary power units (3, 7) are connected by means of said input interfaces to said at least one gearbox (5).

## Description

The invention relates to a rotary wing aircraft with a propulsion system with the features of the preamble of claim 1.

One of the major advantages of rotary wing aircrafts is the possibility to stand still in flight, i. e. hovering. Said hovering is at the cost of a high power demand from the rotary wing aircraft inherent propulsion system. Said high power demand - as a result of rotary wing aircraft flight characteristics -, decreases significantly with increasing rotary wing aircraft speed, till the best endurance speed is achieved at minimum power demand from the rotary wing aircraft. Thus high power has to be installed for hover, while said high power is not needed at best endurance speed. Due to certification and operational requirements even higher power has to be installed in multiple engine rotary wing aircrafts to allow for a sufficient safety margin in case of one engine failing.

Conventional gas turbine engines installed on modern rotary wing aircrafts are characterised by an efficiency that is decreasing towards part load operation, such as best endurance speed during typical forward flight.

The combination of wide spread power requirements, high engine peak loads and the low engine efficiency at part load operation result in rotary wing aircraft engines operated at low efficiency in main parts of a flight mission. Efficiency may be improved if only one of two gas turbine engines of a rotary wing aircraft is operated at high engine output power and thus at a proper efficiency while the other of said gas turbine engines is set to a standby mode by being shut down or set to operational conditions with minimum fuel or power consumption. To ensure the required level of safety, necessary to satisfy airworthiness regulations, if only one of two gas turbine engines of a rotary wing aircraft is operated while the other of said gas turbine engines is set to a standby mode, special emergency procedures and respective technologies have to be implemented. Even if the restart time is reduced, a significant period of time without any power available remains, deteriorating the safety margins. Further disadvantages are:
the rotary wing aircraft relies on the conventional gas turbine engine power only;
no boost functions to improve rotary wing aircraft performance;
inevitable loss of altitude in case of failure/stop of an operative engine until dormant engine is operative again. This will limit the flight envelope of the rotary wing aircraft due to the decreased safety margins on altitude;
limited power available by remaining engine with low margin for intentional or unintentional manoeuvre loads.

The document WO2012059671 A2 discloses special means to reduce the specific fuel consumption Cs of a twin engine rotary wing aircraft without compromising on the safety conditions regarding the minimum amount of power to be supplied for any kind of mission by guaranteeing reliable in-flight restarts. Two turbine engines are each equipped with a gas generator, with a free turbine and with active drive means capable of keeping the gas generator rotating with the combustion chamber inactive, and an emergency assistance device comprising near-instantaneous firing means and mechanical means for accelerating the gas generator. A control system controls the drive means and the emergency assistance devices for the gas generators according to the conditions and phases of flight of the rotary wing aircraft following a mission profile logged beforehand in a memory of this system. Deactivation and restart control reduce the time without power from the deactivated turbine engine at the cost of a lower fuel saving benefit. A restart time remains for the deactivated turbine engine. If one turbine engine is deactivated and the other turbine engine fails, said restart time remains during which the crew has to cope with total loss of engine power and autorotation flight conditions losing altitude with every second. Although the restart time has been reduced, said restart time remains a significant period of time without any power available for the flight of the rotary wing aircraft and consequently there results a lack of safety margins.

The object of the invention is to provide a rotary wing aircraft with a propulsion system for improved rotary wing aircraft performance and improved flight safety.

The solution is provided with a rotary wing aircraft with a propulsion system according to claim 1 of the invention. Preferred embodiments of the invention are provided with the respective subject matters of the subclaims.

According to the invention a rotary wing aircraft, e. g. a rotary wing aircraft, is provided with a propulsion system and one or more consumer units. Said propulsion system comprises control means and two or more primary power units with at least one of the primary power units being controllable by the control means to be optionally inoperative while at least another one of the primary power units is fully operative. Said propulsion system comprises in addition at least one supplementary power unit, controllable by the control means to be optionally operative, particularly as a function of the operative conditions of the primary power units. Said propulsion system further comprises at least one gearbox with input and output interfaces, said at least one gearbox being connected by means of said output interfaces to the one or more consumer units, while each of the primary power units are connected by means of said input interfaces to said at least one gearbox and said at least one supplementary power unit is connected by means of said input and/or output interfaces to said at least one gearbox. The propulsion system of the inventive rotary wing aircraft is provided with at least one supplementary power unit that can be switched on and off as required. Also the primary power units are equipped to switch in flight between an "active/operational" operating condition and an "inactive" operating condition, e.g. shut off, super idle for self preservation or sustain of the rotary wing aircraft at minimum fuel consumption.. The inventive rotary wing aircraft operates more efficiently with the at least one supplementary power unit allowing a broader spectrum of possible uses due to an improved overall performance, manoeuvrability, range, fuel consumption and comfort. The inventive rotary wing aircraft provides as well improved flight safety in terms of aviation regulations and operation.

The one or more gearboxes of the inventive rotary wing aircraft are designed to collect the power from each associated primary and/or supplementary power unit, and to distribute it to one or more consumer units e. g. main rotor, tail rotor, generator, pumps, .... At least one of the primary power units is designed to be set inoperative during rotary wing aircraft operation and to be restarted as fast as possible, if necessary during said rotary wing aircraft operation. Setting a primary power unit inoperative during rotary wing aircraft operation means, to set the power unit to a minimum power consumption mode without transferring any torque to the associated gear box. While one of the primary power units is set inoperative at least one other primary power unit remains fully operative to provide the power required by the inventive rotary wing aircraft at part load flight operation. In addition to the installed primary power units the at least one supplementary power unit is integrated on board of the inventive rotary wing aircraft, said at least one supplementary power unit being connected to the associated gear box. The at least one supplementary power unit is designed to provide power ranging from >0% to 100% of the inventive rotary wing aircraft's power consumption at "best endurance" flight conditions.

The at least one supplementary power unit is characterized by the ability to immediately provide the necessary support to the inventive rotary wing aircraft's flight operation by additional power supply in the following most important cases:
if a primary power unit of the inventive rotary wing aircraft fails inadvertently. Thus the lack of power caused by the inadvertent fail of a primary power unit is partly compensated by the at least one supplementary power unit. The use of the at least one supplementary power unit is preferably intermediate till the primary power unit earlier set inoperative is restarted. The at least one supplementary power unit supports flight operation of the inventive rotary wing aircraft, thus enabling safe continuous flight until the one or more inactive primary power units are reactivated or the supplementary power unit assists the remaining primary power units to ensure a safe landing of the inventive rotary wing aircraft.
if the power required by the inventive rotary wing aircraft exceeds the power available of the operative primary power units. Thus the gap between power required and power available is filled by the at least one supplementary power unit. The use of the at least one supplementary power unit may be intermediate till the power required by the inventive rotary wing aircraft falls below the available power of the primary power units. Furthermore the at least one supplementary power unit allows support of the operative primary power units with a boost function to the inventive rotary wing aircraft in order to provide additional torque if the installed primary power units do not provide sufficient power in certain flight conditions, e.g. hot and high flight condition. The inventive rotary wing aircraft allows support of "One Engine Inoperative (OEI)" performance by the supplementary power unit, thus supporting single-engine take-off and landing depending on the operating take-off weight of the ROTARY WING AIRCRAFT or increases the maximum take-off weight (MTOW) due to the supplementary power units increasing the power margin.

According to a preferred embodiment of the invention the two or more primary power units are gas-turbine engines.

According to a further preferred embodiment of the invention the at least one supplementary power unit is a mechanical, electric, pneumatic and/or hydraulic device, a diesel, petroleum engine and/or a rotary disc engine, e. g. Wankel engine and/or any combinations thereof.

According to a further preferred embodiment of the invention the at least one supplementary power unit is designed to provide power to its associated gear box ranging from >0% to 100% of the power consumption at "best endurance" flight condition.

According to a further preferred embodiment of the invention said input interfaces of the at least one gearbox are connected by mechanical, hydraulic and/or electric means directly to each of the primary and supplementary power units, while said output interfaces of the at least one gearbox are connected mechanically to the supplementary power units.

According to a further preferred embodiment of the invention said mechanical means comprise shafts.

According to a further preferred embodiment of the invention said supplementary power unit is integrated into the input interface of the at least one gearbox.

According to a further preferred embodiment of the invention at least two rotary wing systems with each at least one respectively associated gearbox are provided on the rotary wing aircraft. The respectively associated gearboxes each are connected via respective input interfaces to associated links driven each by one supplementary power unit and by one primary power unit. The gearboxes are inter connected with each other via a redundancy link in order to provide additional safety if the combination of power units of one of the two rotary wing systems fail to provide sufficient power for allowing the specific flight conditions requested by the inventive rotary wing aircraft.

A first favorite fulfillment mode of a propulsion system of the invention comprises two equal gas turbine engines as primary power units and one electrical engine as supplementary power unit, each, when active, providing power to the aircraft dynamic system via main gear box input interfaces. Both gas turbine engines are characterized by the ability to be set inoperative, e.g. shut down or to be in a minimum self-sustaining operation at minimum fuel flow, and restarted in flight as required for an optimized flight operation of the inventive rotary wing aircraft. The supplementary power unit can be activated and power controlled as required for flight operation of the inventive rotary wing aircraft. For cruise flight one gas turbine engine will be shut down and the other one will be operative with higher load and thus more efficient.

In case the power required intermediately exceeds the power available from the operative engine of the inventive rotary wing aircraft, the electric engine is activated and adds power to fulfill the power requirement. Thus the inoperative gas turbine engine is not required to be restarted if only intermediate power peaks occur.

In case an operative gas turbine engine shuts down inadvertently, the electric motor is activated instantaneously and provides power to support the emergency procedure till the start procedure of the inoperative gas turbine engine is completed. Thus the handling of the inventive rotary wing aircraft is improved while no primary propulsion unit is active and the loss of altitude is reduced. When the inoperative gas turbine engine start procedure is completed the electric motor may continue to operate acting as described before to support intermediate power required for peaks.

The electric motor of the first favorite fulfillment mode is characterized by a required activation time between 0.08 and 1.00 seconds.

A second fulfillment mode of a propulsion system of the inventive rotary wing aircraft comprises two diesel engines as primary power units, namely a small diesel engine dimensioned to provide between ¼ up to less than half of Take Off Power of the inventive rotary wing aircraft, and a big diesel engine, dimensioned to solely provide the power required for cruise flight of the inventive rotary wing aircraft,. Said primary power units are connected via the input interface to the main gear box and two pneumatically driven turbines as supplementary power units being an integrated part of the main gear box. The small diesel engine is equipped to be shut down or restarted in flight as required for optimized flight operation of the inventive rotary wing aircraft. During high load operation, e.g. hovering or climb, both diesel engines of the inventive rotary wing aircraft are operative.

In case of low to medium load cruise flight the smaller diesel engine is shut down. If in this state the bigger diesel engine shuts down inadvertently, the pneumatically driven turbines are activated to support the emergency procedure and reduce loss of altitude till the smaller diesel engine starting procedure is complete. The pneumatically driven turbines may provide a number of available activations usable for example to support the final approach with only the small diesel engine operating with additional power.

A third fulfillment mode of a propulsion system comprises one electric motor and one gas turbine engine as primary power unit and pyrotechnically driven blade tip nozzles as supplementary power units at output interfaces of the at least one gearbox. Electric motor and gas turbine engine are operative in parallel for high load operation, e.g. hover or climb. The gas turbine engine is set inoperative for a case of a low range cruise within environmentally restricted airspace requiring zero emission operation. The electric motor is set inoperative in case of a long range cruise flight with the gas turbine engine operated in its most efficient power range.

If in the case of the gas turbine engine set inoperative the electric motor fails, the pyrotechnically driven blade tip nozzles are activated to support the emergency procedure till the gas turbine engines starting procedure is completed for a simplified overall system integrating supplementary power unit, gearbox, rotary wing mounting and control into one system.

A gas turbine engine is characterized by a starting time between 5 seconds with special fuel saving mode and restart enhancement and 40 seconds without. Respectively in this case the supplementary power unit activation time of the inventive rotary wing aircraft is between 5 times and 500 times faster than the starting procedure of the primary power units.

Preferred embodiments of the invention are described with reference to the following description and drawings.
Fig. 1 shows a layout of a rotary wing aircraft according to the invention,
Fig. 2 shows a layout of a further rotary wing aircraft according to the invention,
Fig. 3 shows a layout of a still further rotary wing aircraft according to the invention,
Fig. 4 shows performance graphs for different operation modes of rotary wing aircrafts, and
Fig. 5 shows a further performance graph for an operation mode of the rotary wing aircraft according to the invention.

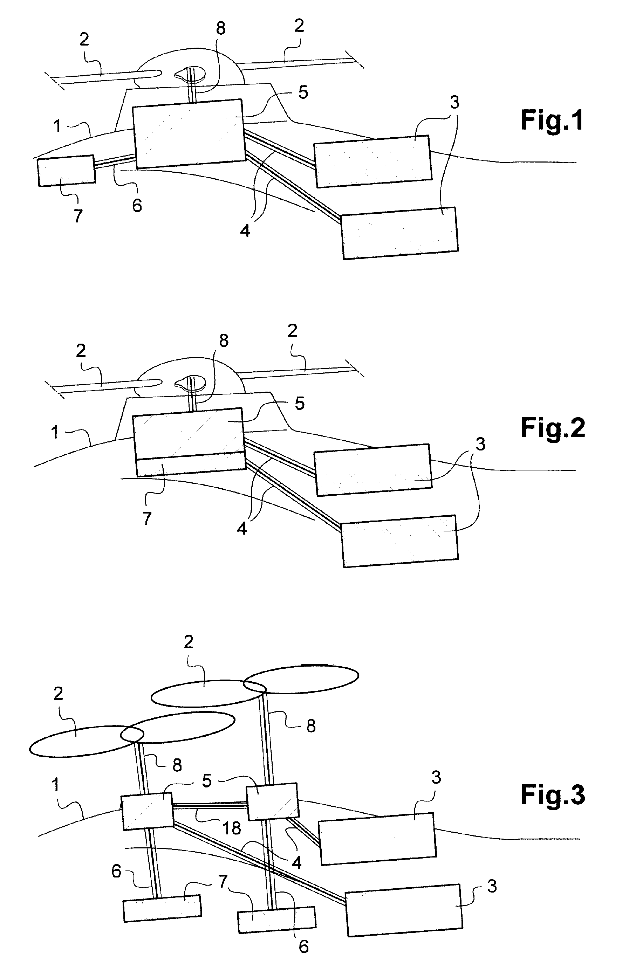

According to Fig. 1 a rotary wing aircraft 1 is provided with rotary wings 2 as consumer units, which are propelled by a propulsion system with two primary power units 3, e.g. gas-turbines, diesel engines or hydraulic propulsion units. Each of the primary power units 3 is connected via an input interface 4, such as a mechanical shaft 4, hydraulic, electric means to one gear box 5. The gear box 5 collects and transmits the power received from the primary power units 3 via an output interface, such as a power consumer shaft 8 in order to propel users, such as the rotary wings 2.

One of the two primary power units 3 is controllable by control means (not shown) to be shut off, while the other one of the two primary power units 3 is operating according to the requirements of the specific flight mission of the rotary wing aircraft 1.

One supplementary power unit 7 is connected via a further input interface 6, such as a mechanical shaft, hydraulic, electric means to the gear box 5. The gear box 5 collects and transmits the power received from the supplementary power unit 7 via the output interface 8 in order to propel users, such as the rotary wings 2.

This supplementary power unit 7 is controllable by the control means to be instantaneously activated and deactivated as required for flight operation. The supplementary power unit 7 provides supplementary power to the gear box 5 after activation. Activation and deactivation of the supplementary power unit is significantly faster, i. e. at least 5 to ten times faster than the activation and deactivation of the primary power units 3.

In order to add performance, i. e. boost to the rotary wing aircraft 1 during specific flight conditions this supplementary power unit 7 works simultaneously in parallel with the primary propulsion units 3.

The operation modes according to specific flight mission of the rotary wing aircraft 1 are as follows:
- one primary power unit 3 set inoperative and one primary power unit 3 operative to provide the power required without support from the supplementary power unit 7.
- one primary power unit 3 inoperative - intentionally or unintentionally - and the supplementary power unit 7 operating in parallel to provide support. In this operation mode the supplementary power unit 7 provides support, in order to reduce the impact on the flight operation, if at least one of the operative primary power units 3 fails. With the support from the operating supplementary power unit 7, e. g. the loss of flight altitude 13 is lower than any altitude loss without supplementary power unit 7.
- all primary power units 3 are operative with the supplementary power unit 7 operating in parallel for supplemental performance. In this operation mode the supplementary power unit 7 boosts the overall performance of the rotary wing aircraft 1.

According to Fig. 2 corresponding features are referred to with the references of Fig. 1. The supplementary power unit 7 is integrated to the output interface of the gearbox 5 by means of pyrotechnically driven blade tip nozzles (not shown) as integrated supplementary propulsion unit directly linked via the rotary wings to the output interface of the gearbox 5.

According to Fig. 3 corresponding features are referred to with the references of Fig. 1 - 2. Two rotary wing systems 2 with two respectively associated gearboxes 5 are provided on the rotary wing aircraft 1. The two respectively associated gearboxes 5 each are connected via respective input interfaces to associated links 6 driven each by one supplementary power unit 7 and by one primary power unit 3. The two gearboxes 5 are inter connected with each other via a redundancy link 18 in order to provide additional safety if the combination of power units 3, 7 of one of the two rotary wing systems 2 fail to provide sufficient power for allowing the specific flight conditions requested by the rotary wing aircraft 1.

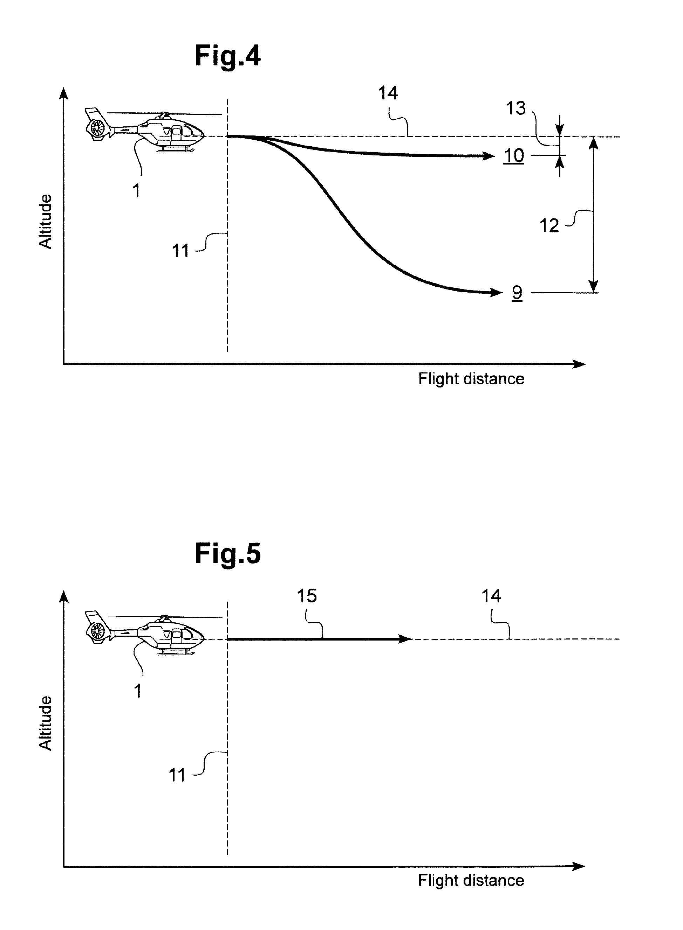

According to Fig. 4 corresponding features are referred to with the references of Fig. 1 - 3. The rotary wing aircraft 1 with two operative primary power units 3 is assumed to operate along a cruise flight condition flight path 14. If at a shut-off point of time 11 one of the operative primary power units 3 fails - intentionally or unintentionally -, the impact on the flight operation, represented by the loss of flight altitude 13 with the supplementary power unit 7 is lower than compared to the altitude loss 12 of a rotary wing aircraft 1 with a primary power units 3 shut-off without supplementary power unit assistance of a conventional system.

With an activated supplementary power unit 7 and at least one primary power unit 3 deactivated on purpose for a certain part of the flight operation while the power required from the remaining operative primary power units 3 is increased, higher primary power unit efficiencies are provided and the rotary wing aircraft 1 is kept in safe cruise flight conditions 15.

### Reference List

1. rotary wing aircraft
2. Power consumer unit
3. Primary power unit
4. Link from power unit to gearbox
5. Gearbox
6. Link from supplementary power unit to gearbox
7. Supplementary power unit
8. Power consumer shaft
9. Flight path without supplementary power unit assistance
10. Flight path with supplementary power unit assistance
11. Primary power unit shut-off point of time
12. Altitude lost due to engine shut-off without supplementary power unit assistance
13. Altitude lost due to engine shut-off with supplementary power unit assistance
14. Cruise flight condition flight path
15. Flight path with at least one deactivated primary power unit yet with assistance of supplementary power system
16.
17.
18. Redundancy link between gearbox units

## Claims

1. A rotary wing aircraft (1) with a propulsion system and one or more consumer units (2),
said propulsion system comprising:
- control means,
- two or more primary power units (3), at least one of the primary power units (3) being controllable by the control means to be optionally inoperative while at least another one of the primary power units (3) is fully operative,
- at least one supplementary power unit (7), controllable by the control means to be optionally operative and
- at least one gearbox (5) with input and output interfaces, said at least one gearbox (5) being connected to the two or more primary power units (3) by means of said input interfaces to said at least one gearbox (5) and by means of said output interfaces to the one or more consumer units (2), wherein each of the at least one supplementary power units (7) are connected by means of said input and/or output interfaces to said at least one gearbox (5).

2. The aircraft (1) according to claim 1, wherein the two or more primary power units (3) are gas-turbine engines.

3. The aircraft (1) according to claim 1, wherein the at least one supplementary power unit (7) is a mechanical, electric, pneumatic and/or hydraulic device, a diesel, petroleum engine and/or a rotary disc engine, e. g. Wankel engine and/or any combinations thereof.

4. The aircraft (1) according to claim 1, wherein the at least one supplementary power unit (7) is designed to provide power ranging from >0% to 100% of the power consumption at "best endurance" flight condition.

5. The aircraft (1) according to claim 1, wherein said input interfaces of the at least one gearbox (5) are connected by mechanical, hydraulic and/or electric means directly to each of the primary and supplementary power units (3, 7), while said output interfaces of the at least one gearbox (5) are connected mechanically to the supplementary power units (7).

6. The aircraft (1) according to claim 5, wherein said mechanical means are shafts (4, 6).

7. The aircraft (1) according to claim 1, wherein said supplementary power unit (7) is integrated into the input interface of gearbox (5).

8. The aircraft (1) according to claim 1, wherein at least two rotary wing systems (2), each with one respectively associated gearbox (5) are provided, said respectively associated gearbox (5) being driven each by at least one supplementary power unit (7) and by at least one prlmary power unit (3) and said respectively associated gearboxes (5) being inter connected with each other via a redundancy link (18).
